# FASCICULE DE BREVET EUROPEEN

(11) **EP 1 744 940 B1**
(45) Date de publication et mention de la délivrance du brevet: **30.07.2008**
(21) Numéro de dépôt: 05716443.6
(22) Date de dépôt: 30.03.2005
(51) Int. Cl.: B60S 1/38

(54) **BALAI D"ESSUIE-GLACE COMPORTANT UNE MONTURE DE SUPPORT, UNE VERTEBRE INTERNE ET UN ELEMENT DE LIAISON**
WISCHERBLATT MIT EINEM STÜTZRAHMEN, EINEM INNEREN VERSTEIFUNGSGLIED UND EINEM VERBUNDENEN ELEMENT
WIPER BLADE COMPRISING A SUPPORTING FRAME, AN INTERNAL STIFFENING MEMBER AND A CONNECTING ELEMENT

(30) Priorité: 06.04.2004 FR 0403616
(43) Date de publication de la demande: 24.01.2007
(73) Titulaire: VALEO SYSTEMES D'ESSUYAGE, 78321 La Verrière (FR)
(72) Inventeur: JARASSON, Jean-Michel, F-78990 Elancourt (FR); POTON, Eric, F-63430 Pont du Château (FR); GRASSO, Giuseppe, F-63340 Le Breuil sur Couze (FR)
(86) Numéro de dépôt international: PCT/EP2005/003316
(87) Numéro de publication internationale: WO 2005/108176

(56) Documents cités:
- EP-A- 1 119 478
- DE-A- 19 641 042
- DE-A- 19 835 065
- DE-A1- 19 801 058
- US-A- 6 161 248

## Description

L'invention propose un balai d'essuie-glace de véhicule automobile du type "flat-blade" comportant un élément de liaison avec un bras d'entraînement qui réalise la fixation d'un élément structurel avec une monture de support.

L'invention propose plus particulièrement un balai d'essuie-glace de véhicule automobile, comportant
- une monture de support d'orientation principale longitudinale, qui comporte des moyens de support d'une raclette d'essuyage et un corps tubulaire d'axe principal longitudinal;
- un élément structurel en forme de lame horizontale longitudinale, qui est reçu à l'intérieur du corps tubulaire ; et
- un élément de liaison du balai avec un bras d'entraînement, qui est monté sur la monture de support, et qui comporte des moyens de blocage pour bloquer longitudinalement l'élément structurel en position dans le corps tubulaire.

Un tel balai est connu du document DE 198 01 058 A1.

Selon une conception consistant à réaliser des balais d'essuie-glace de faible hauteur, la structure articulée du balai d'essuie-glace, qui porte la raclette ou lame d'essuyage est supprimée, et c'est l'association d'une monture de support creuse avec une vertèbre longitudinale de rigidification qui constitue la structure du balai proprement dit.

La monture de support est en forme de tronçon de profilé longitudinal qui comporte un corps tubulaire à l'intérieur duquel la vertèbre, qui est en forme de lame horizontale longitudinale est reçue. La monture comporte enfin des crochets inférieurs de montage de la raclette d'essuyage.

La vertèbre est réalisée en un matériau élastique, pour permettre de plaquer la raclette d'essuyage contre la surface vitrée à essuyer.

Le balai comporte aussi un élément de liaison du balai avec un bras d'entraînement en balayage, qui est monté autour du corps de la monture de support, et qui comporte des moyens de blocage pour bloquer la vertèbre en mouvement longitudinal en position montée à l'intérieur du corps de la monture de support.

Le document US-A-6.161.248 décrit un balai d'essuie-glace de type "flat-blade" pour lequel l'élément de liaison est relié à la vertèbre par des languettes élastiques qui sont reçues dans des gorges complémentaires de la vertèbre.

Cependant, au fur et à mesure de l'utilisation du balai d'essuie-glace, les languettes élastiques se déforment progressivement et de manière permanente, de manière que le montage prend un certain jeu réduisant l'efficacité du balai d'essuie-glace.

L'invention a pour but de proposer un balai d'essuie-glace pour lequel les moyens de blocage de la vertèbre en position montée dans la monture de support sont suffisamment rigides pour ne pas se déformer progressivement, et qui permettent d'éviter tout jeu entre les différents éléments du balai d'essuie-glace.

Dans ce but, l'invention propose un balai d'essuie-glace du type décrit précédemment, caractérisé en ce que les moyens de blocage de l'élément de liaison comportent des ergots qui coopèrent avec des encoches réalisées dans les bords latéraux de l'élément structurel, pour réaliser le blocage de l'élément structurel dans le corps tubulaire.

Selon d'autres caractéristiques de l'invention ;
- les ergots sont ménagés sur des pattes latérales longitudinales verticales de l'élément de liaison ;
- chaque ergot s'étend transversalement vers l'intérieur de l'élément de liaison, depuis une face longitudinale verticale interne de la patte latérale associée, et l'extrémité transversale libre de chaque ergot comporte une dent d'arrêt qui est reçue dans une encoche associée de l'élément structurel ;
- chaque dent d'arrêt réalise le serrage d'une partie d'une paroi latérale du corps tubulaire dans le fond de l'encoche associée ;
- lors de l'assemblage, afin de permettre d'obtenir une dimension constante entre les deux parties de l'élément de liaison lorsque celui-ci est réalisé en deux parties, c'est-à-dire une largeur constante du connecteur après montage, et donc de rattraper les écarts dus à la fabrication de ces deux parties ou demi-éléments, les dents ont la possibilité de s'écraser dans les encoches de la structure élastique ;
- les parois latérales et la paroi supérieure du corps tubulaire comportent une ouverture latérale qui est située en vis-à-vis de chaque encoche de l'élément structurel, et qui est traversée par la dent d'arrêt de l'ergot associé ;
- l'ouverture latérale est réalisée par découpe de la paroi latérale associée et de la paroi supérieure du corps tubulaire, préalablement au montage de l'élément de liaison sur la monture de support ;
- chaque ouverture latérale comporte une entaille réalisée dans la paroi horizontale supérieure du corps, et l'extrémité transversale libre de chaque ergot comporte une dent supérieure qui est reçue dans ladite entaille, pour positionner longitudinalement l'élément de liaison par rapport à la monture de support ;
   chaque entaille et la dent supérieure associée sont de formes complémentaires, globalement trapézoïdales, en pouvant notamment être de formes carrées, rectangulaires, voire trapézoïdales (Lorsque le corps tubulaire est réalisé sous une forme prédécoupée non perforante, la forme rectangulaire est de préférence retenue) ;
- l'ouverture latérale est réalisée par découpage de la paroi latérale associée et des parois horizontales supérieure et inférieure du corps tubulaire, lors du montage de l'élément de liaison sur la monture de support ;
- l'extrémité transversale libre de chaque ergot comporte une dent supérieure située au dessus de la dent d'arrêt, qui est apte à découper en partie la paroi latérale associée et la paroi horizontale supérieure du corps tubulaire, une dent inférieure, située au dessous de la dent d'arrêt, qui est apte à découper en partie la paroi latérale associée et la paroi horizontale inférieure du corps tubulaire, et la dent d'arrêt est apte à découper en partie la paroi latérale associée, pour réaliser la découpe de l'ouverture lors du montage de l'élément de liaison sur la monture de support ;
- la dent d'arrêt est située transversalement en retrait par rapport à la dent supérieure et par rapport à la dent inférieure ;
- les dents supérieure et inférieure son agencées verticalement de part et d'autre de l'élément structurel, de manière à réaliser le positionnement vertical de l'élément structurel par rapport à l'élément de liaison ;
- la dent d'arrêt, la dent supérieure et/ou la dent inférieure est en forme de prisme à section horizontale triangulaire (Dans le cas de la version prédécoupée du corps tubulaire, les dents ont de préférence une forme cylindrique ou encore triangulaire ;
- chaque encoche de l'élément structurel est de forme globalement triangulaire complémentaire de la dent d'arrêt associée, ou cylindrique dans la version prédécoupée de l'élément tubulaire ;
- chaque encoche de l'élément structurel comporte un premier tronçon de forme globalement rectangulaire réalisée dans le bord latéral de l'élément structurel et un tronçon de forme globalement triangulaire (ou cylindrique dans la version prédécoupée) complémentaire de la dent d'arrêt associée réalisé dans le fond longitudinal du premier tronçon.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective éclatée d'un balai d'essuie-glace conforme à l'invention
- la figure 2 est vue en coupe horizontale du balai d'essuie-glace représenté à la figure 1, avant le montage de l'élément de liaison;
- la figure 3 est une vue similaire à celle de la figure 2, dans laquelle l'élément de liaison est monté sur la monture de support, montrant le serrage des parois verticales dans les encoches;
- la figure 4 est une vue similaire à celle de la figure 2, représentant un autre mode de réalisation du balai dans lequel chaque paroi verticale comporte une entaille associée à chacun des ergots
- la figure 5 est une vue similaire à celle de la figure 3, représentant un balai conforme au mode de réalisation représenté à la figure 4 ;
- la figure 6 est une vue similaire à celle de la figure 1, d'encore un autre mode de réalisation du balai conforme à l'invention, selon lequel chaque ergot comporte une dent supérieure et une dent inférieure et selon lequel la monture de support comporte des entailles associées
- la figure 7 est une représentation schématique en perspective vue de dessus du balai représenté à la figure 6, montrant la forme des dents supérieures des ergots, et la orme des entailles associées
- la figure 8 est une section suivant un plan vertical transversal d'un balai conforme à un autre mode de réalisation de l'invention selon lequel les dents supérieures et inférieures réalisent la découpe des parois du corps tubulaire
- la figure 9 représente un détail en perspective d'un ergot représenté à la figure 8, montrant une forme des dents.

Pour la description de l'invention, on adoptera à titre non limitatif les orientations verticale, longitudinale et transversale selon le repère V, L, T indiqué aux figures.

Dans la description qui va suivre, des éléments identiques, similaires ou analogues seront désignés par les mêmes chiffres de référence.

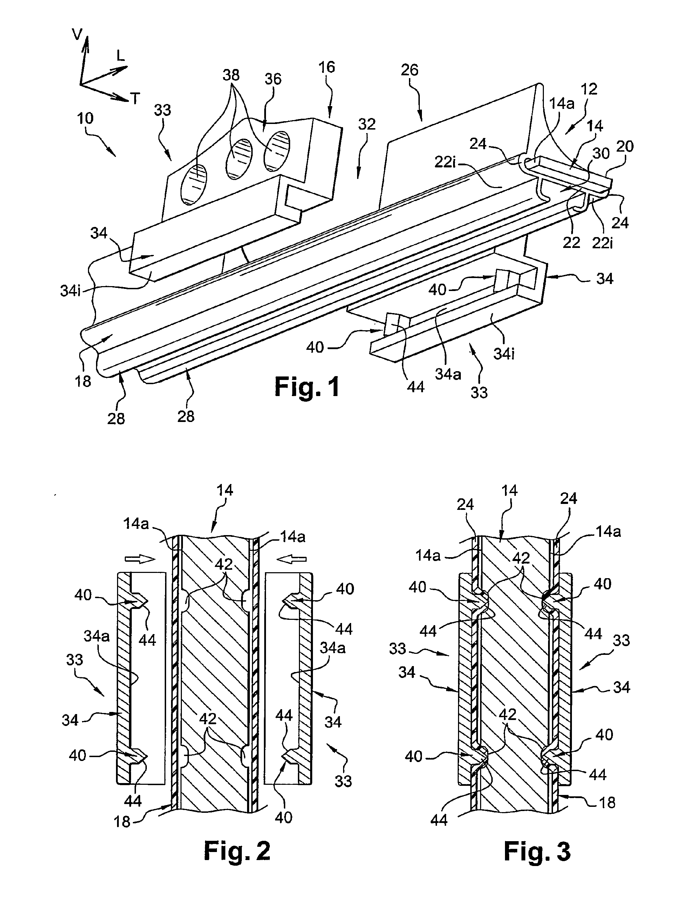

On a représenté à la figure 1 un balai d'essuie-glace 10 de type "flat-blade", qui comporte une monture de support 12 d'orientation principale longitudinale, qui porte les autres composants du balai 10, une vertèbre interne 14 en forme de lame horizontale longitudinale, un élément de liaison 16 permettant de relier le balai d'essuie-glace 10 à un bras d'entraînement (non représenté) et une raclette d'essuyage (non représentée).

La monture 12 comporte un corps central 18 tubulaire d'axe principal longitudinal, qui est délimité par une paroi supérieure horizontale 20, une paroi inférieure horizontale 22, et par deux parois latérales longitudinales verticales 24.

Bien entendu, cette délimitation du corps tubulaire 18 n'est pas limitative. On peut en effet avoir un corps tubulaire dont la section a une forme circulaire ou elliptique dès lors que ce corps est apte à recevoir une vertèbre 14, quelque soit sa forme.

La monture 12 comporte aussi une nervure supérieure longitudinale 26, qui s'étend verticalement vers le haut depuis la face supérieure de la paroi supérieure horizontale 20 du corps 18, et qui est conformée aérodynamiquement de manière à générer des efforts d'appui du balai 10 sur la surface vitrée, sous l'action du vent relatif produit par le déplacement du véhicule.

Enfin, la monture de support 12 comporte des moyens inférieurs de montage de la raclette d'essuyage, qui consiste ici en deux crochets inférieurs longitudinaux 28 en vis-à-vis, et qui délimitent un corps tubulaire 30 ouvert vers le bas, dans lequel un dos supérieur complémentaire de la raclette est monté.

La vertèbre 14 constitue l'élément structurel du balai 10, qui rigidifie la monture 12. La vertèbre 14 est réalisée en un matériau relativement rigide, par exemple en acier, et elle consiste en une lame horizontale longitudinale qui est agencée à l'intérieur du corps tubulaire 18.

L'élément de liaison 16 est monté longitudinalement globalement au milieu de la monture 12, en chevauchant le corps 18 de la monture 12, c'est-à-dire qui s'étend au-dessus de la paroi supérieure horizontale 20, et de part et d'autre des parois latérales 24.

La nervure supérieure 26 comporte une ouverture 32 au travers de laquelle l'élément de liaison 16 est monté sur la monture 12.

L'élément de liaison 16 est formé en deux parties 33 qui sont symétriques par rapport à un plan longitudinal vertical médian du balai 10, et qui sont montées sur le corps 18 selon un mouvement transversal.

Chaque partie 33 de l'élément de liaison 16 comporte une embase supérieure 36 qui est en appui sur la face supérieure de la paroi supérieure horizontale 20 du corps 18, et qui comporte des moyens 38 de fixation à l'embase supérieure 36 de l'autre partie 33 de l'élément de liaison 16.

L'élément de liaison 16 comporte aussi deux pattes latérales inférieures 34, chacune s'étendant vers le bas depuis une embase supérieure 36 de la partie 33 associée, et qui sont réparties transversalement de part et d'autre du corps 18 de la monture 12, de manière à réaliser le positionnement transversal de l'élément de liaison 16 par rapport au corps 18.

L'extrémité inférieure libre 34i de chaque patte latérale 34 est recourbée vers l'intérieur de l'élément de liaison 16, en constituant un crochet qui s'appuie contre la face inférieure 22i de la paroi inférieure horizontale 22 du corps 18. L'extrémité inférieure 34i de chaque patte latérale 34 permet ainsi de réaliser le blocage vertical de l'élément de liaison 16 en position montée autour du corps 18.

Enfin, l'élément de liaison 16 comporte des moyens de blocage qui réalisent le blocage longitudinal de la vertèbre 14 en position montée à l'intérieur du corps creux 18 de la monture de support 12.

Les moyens de blocage de l'élément de liaison 16 comportent des ergots transversaux internes 40 qui coopèrent avec des encoches 42 de la vertèbre 14 pour réaliser le blocage de la vertèbre 14 en position montée dans le corps 18 de la monture.

Ces ergots sont ménagés sur les pattes latérales 34.

Les encoches 42, qui reçoivent les ergots 40, sont réalisées dans les bords latéraux 14a de la vertèbre 14, et selon un mode de réalisation de l'invention, les encoches 42 sont de forme complémentaire des ergots 40.

Ici, chaque patte latérale 34 comporte deux ergots 40 et chaque bord latéral 14a de la vertèbre 14 comporte par conséquent deux encoches 42.

Chaque ergot 40 s'étend transversalement vers l'intérieur de l'élément de liaison 16, depuis une face longitudinale verticale interne 34a de la patte latérale 34 associée, et son extrémité libre interne comporte une première dent d'arrêt 44 qui est reçue dans l'encoche associée 42 de la vertèbre 14.

On a représenté aux figures 2 et 3 un premier mode de réalisation des ergots 40 et des encoches 42, selon lequel chaque paroi latérale 24 du corps 18 est en partie serrée dans le fond des encoches 42 associées, par les dents d'arrêt 44.

Ce serrage de la paroi latérale 24 permet, par déformation élastique, ou plastique de la paroi latérale 24 d'avoir directement une fixation de la vertèbre 14, qui ne nécessite pas de modifier la monture de support 12, ce qui réduit fortement le coût de fabrication de la monture de support 12 et donc du balai d'essuie-glace 10.

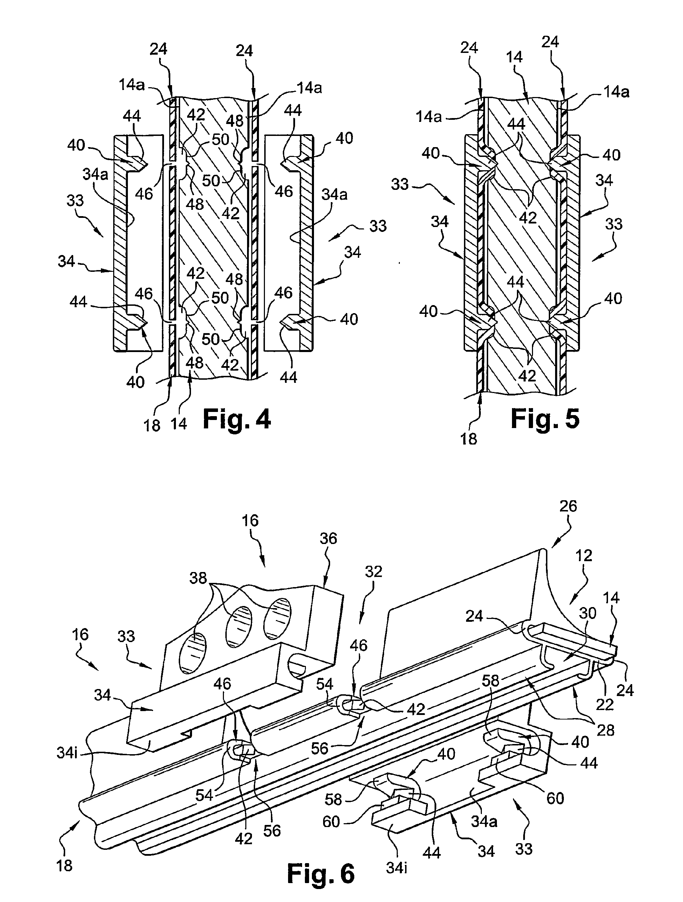

On a représenté aux figures 4 et 5 un autre mode de réalisation de l'invention selon lequel les parois latérales 24 et la paroi supérieure horizontale 20 du corps 18 comportent une ouverture latérale 46 qui est située en vis-à-vis de chaque encoche 42, et qui est traversée pas une dent d'arrêt 44 associée de l'élément de liaison 16.

Cette ouverture latérale 46 est réalisée préalablement au montage de l'élément de liaison 16 sur la monture 12, lors du moulage de la monture 12, ou bien par découpage.

Chaque dent d'arrêt 44 est ainsi reçue dans le font de l'encoche 42 associée, améliorant ainsi le blocage longitudinal de la vertèbre 14 par rapport à l'élément de liaison 16.

Cependant, la largeur de chaque ouverture 46 est déterminée de manière que la dent d'arrêt 44 associée réalise toujours le serrage de la paroi latérale 24 associée dans le fond de l'encoche 42.

Selon ce mode de réalisation, chaque encoche 42 de la vertèbre est réalisée en deux parties, un premier tronçon 48 qui est réalisé dans le bord latéral de la vertèbre, et un deuxième tronçon 50 qui est réalisé dans le fond du premier tronçon 48.

Par ailleurs, le premier tronçon 48 est évasé longitudinalement par rapport au deuxième tronçon, pour recevoir la partie de la paroi latérale 24 du corps qui est serrée par la dent d'arrêt 44.

La monture de support 12 est réalisée en un matériau plastique facilement moulable ou extrudable. Cependant, il se peut que le matériau utilisé soit peu adapté à une déformation par les dents 44, ce qui peut affaiblir localement la résistance mécanique de la monture 12.

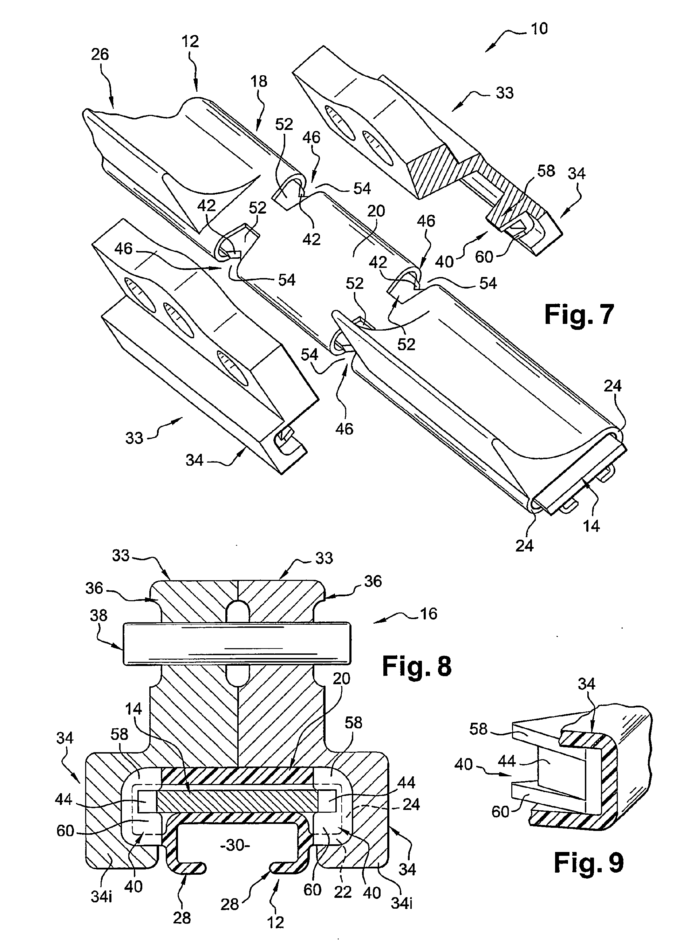

On a représenté aux figures 6 et 7 un autre mode de réalisation des ouvertures latérales 46 qui permettent de réaliser le positionnement longitudinal de l'élément de liaison 16 par rapport à la monture de support 12 lors de son montage.

L'ouverture latérale 46 comporte ainsi une première entaille supérieure 52 qui s'étend transversalement vers l'intérieur de la monture 12, une deuxième entaille intermédiaire 54 réalisée dans la paroi latérale 24 et une entaille inférieure 56 réalisée dans la paroi inférieure horizontale 22.

Chaque ergot 40 de l'élément de liaison 16 comporte une dent supérieure 58 qui est agencée au dessus de la dent d'arrêt 44, et qui est reçue dans l'entaille supérieure 52 et une dent inférieure 60 qui est agencée au dessous de la dent d'arrêt 44, et qui est reçue dans l'entaille inférieure 56.

La dent supérieure 58 et la dent inférieure 60 sont complémentaires de l'entaille supérieure 52 ou inférieure 60 respective, ce qui permet d'assurer un positionnement sans jeu de l'élément de liaison 16 en position montée sur la monture de support 12.

Ici, comme on peut le voit à la figure 7, l'entaille supérieure 52 et la dent supérieure complémentaire sont de forme globalement trapézoïdale, et selon un mode préféré, elles forment un trapèze isocèle.

De plus, la dent d'arrêt 44 s'étend transversalement en retrait par rapport à la dent supérieure 58 et par rapport à la dent inférieure 60.

Le bord latéral 14a de la vertèbre 14 est ainsi reçu entre les dents supérieure 58 et inférieure 60, réalisant ainsi le positionnement vertical de la vertèbre 14 à l'intérieur du corps 18, notamment pour maintenir la vertèbre 14 en position horizontale.

Selon ce mode de réalisation, les ouvertures latérales 46 sont réalisées avant l'assemblage du balai 10, c'est-à-dire avant le montage de la vertèbre 14 et de l'élément de liaison 16.

La réalisation des ouvertures latérales 46 nécessite donc une étape supplémentaire de découpe de la monture de support 12, ou bien de modifier la forme des moules utilisés.

On a représenté aux figures 8 et 9 un autre mode de réalisation des ergots 40 pour lequel la réalisation des ouvertures latérales 46, c'est-à-dire la découpe des entailles supérieure 52, intermédiaire 54 et inférieure 56, est réalisée lors du montage de l'élément de liaison 16 sur la monture de support 12.

Pour cela, la dent d'arrêt 44, et les dents supérieure 58 et inférieure 60 sont chacune aptes à découper en partie la paroi supérieure horizontale 20, la paroi inférieure horizontale 22 et la paroi latérale 24 en vis-à-vis.

Pour cela, chacune des dents 44, 58, 60 est pointue, ici en forme de prisme à section horizontale triangulaire, et elle est apte à découper la paroi du corps 18, à la manière d'un poinçon.

Ici aussi, la dent d'arrêt 44 est positionnée transversalement en retrait par rapport aux dents, pour que les dents supérieure 58 et inférieure 60 réalisent le positionnement vertical de la vertèbre 14 à l'intérieur du corps 18.

## Revendications

1. Balai d'essuie-glace (10) de véhicule automobile, comportant
- une monture de support (12) d'orientation principale longitudinale, qui comporte des moyens (28) de support d'une raclette d'essuyage et un corps tubulaire (18) d'axe principal longitudinal ;
- un élément structurel (14) en forme de lame horizontale longitudinale, qui est reçu à l'intérieur du corps tubulaire (18) ; et
- un élément de liaison (16) du balai (10) avec un bras d'entraînement, qui est monté sur la monture de support (12), et qui comporte des moyens de blocage pour bloquer longitudinalement l'élément structurel (14) en position dans le corps tubulaire,
**caractérisé en ce que** les moyens de blocage de l'élément de liaison (16) comportent des ergots (40) qui coopèrent avec des encoches (42) réalisées dans les bords latéraux (14a) de l'élément structurel (14), pour réaliser le blocage de l'élément structurel (14) dans le corps tubulaire (18).

2. Balai d'essuie-glace selon la revendication précédente, dans lequel le corps tubulaire (18) est délimité par une paroi horizontale supérieure (20), une paroi horizontale inférieure (22) et par deux parois latérales longitudinales verticales (24) , l'élément de liaison (16) étant monté sur la monture de support (12) par l'intermédiaire de deux pattes latérales (34) longitudinales verticales qui s'étendent de part et d'autre des parois latérales (24) du corps tubulaire (18), **caractérisé en ce que** les ergots (40) sont ménagés sur les pattes latérales (34).

3. Balai (10) d'essuie-glace selon la revendication précédente, **caractérisé en ce que** chaque ergot (40) s'étend transversalement vers l'intérieur de l'élément de liaison (16), depuis une face longitudinale verticale interne (34a) de la patte latérale (34) associée, et **en ce que** l'extrémité transversale libre de chaque ergot (40) comporte une dent d'arrêt (44) qui est reçue dans une encoche (42) associée de l'élément structurel (14).

4. Balai (10) d'essuie-glace selon la revendication précédente, **caractérisé en ce que** chaque dent d'arrêt (44) réalise le serrage d'une partie d'une paroi latérale (24) du corps tubulaire (18) dans le fond de l'encoche (42) associée.

5. Balai (10) d'essuie-glace selon l'une quelconque des revendications 2 à 4, **caractérisé en ce que** les parois latérales (24) et la paroi supérieure (20) du corps tubulaire (18) comportent une ouverture latérale (46) qui est située en vis-à-vis de chaque encoche (42) de l'élément structurel (14), et qui est traversée par la dent d'arrêt (44) de l'ergot (40) associé.

6. Balai (10) d'essuie-glace selon la revendication précédente, **caractérisé en ce que** l'ouverture latérale (46) est réalisée par découpe de la paroi latérale (24) associée et de la paroi supérieure (20) du corps tubulaire (18), préalablement au montage de l'élément de liaison (16) sur la monture de support (12).

7. Balai (10) d'essuie-glace selon la revendication précédente, **caractérisé en ce que** chaque ouverture latérale (46) comporte une entaille (52) réalisée dans la paroi horizontale supérieure (20) du corps (18), et **en ce que** l'extrémité transversale libre de chaque ergot (40) comporte une dent supérieure (58) qui est reçue dans ladite entaille (52), pour positionner longitudinalement l'élément de liaison (16) par rapport à la monture de support (12).

8. Balai (10) d'essuie-glace selon la revendication précédente, **caractérisé en ce que** chaque entaille (52) et la dent supérieure (58) associée sont de formes complémentaires, globalement trapézoïdales.

9. Balai (10) d'essuie-glace selon la revendication 5, **caractérisé en ce que** l'ouverture latérale (46) est réalisée par découpage de la paroi latérale (24) associée et des parois horizontales supérieure (20) et inférieure (22) du corps tubulaire (18), lors du montage de l'élément de liaison (16) sur la monture de support (12).

10. Balai (10) d'essuie-glace selon la revendication précédente, **caractérisé en ce que** l'extrémité transversale libre de chaque ergot (40) comporte une dent supérieure (58) située au dessus de la dent d'arrêt (44), qui est apte à découper en partie la paroi latérale (24) associée et la paroi horizontale supérieure (20) du corps tubulaire (18), une dent inférieure (60), située au dessous de la dent d'arrêt (44), qui est apte à découper en partie la paroi latérale (24) associée et la paroi horizontale inférieure (22) du corps tubulaire (18), et **en ce que** la dent d'arrêt (44) est apte à découper en partie la paroi latérale (24) associée, pour réaliser la découpe de l'ouverture (46) lors du montage de l'élément de liaison (16) sur la monture de support (12).

11. Balai (10) d'essuie-glace selon la revendication précédente, **caractérisé en ce que** la dent d'arrêt (44) est située transversalement en retrait par rapport à la dent supérieure (58) et par rapport à la dent inférieure (60).

12. Balai (10) d'essuie-glace selon la revendication 10 ou 11, **caractérisé en ce que** les dents supérieure (58) et inférieure (60) son agencées verticalement de part et d'autre de l'élément structurel (14), de manière à réaliser le positionnement vertical de l'élément structurel (14) par rapport à l'élément de liaison (16).

13. Balai (10) d'essuie-glace selon l'une quelconque des revendications 3 à 12, **caractérisé en ce que** la dent d'arrêt (44), la dent supérieure (58) et/ou la dent inférieure (60) est en forme de prisme à section horizontale triangulaire.

14. Balai (10) d'essuie-glace selon la revendication précédente, **caractérisé en ce que** chaque encoche (42) de l'élément structurel (14) est de forme globalement triangulaire complémentaire de la dent d'arrêt (44) associée.

15. Balai (10) d'essuie-glace selon l'une quelconque des revendications 3 à 13, **caractérisé en ce que** chaque encoche (42) de l'élément structurel (14) comporte un premier tronçon (48) de forme globalement rectangulaire réalisée dans le bord latéral (14a) de l'élément structurel (14) et un tronçon (50) de forme globalement triangulaire complémentaire de la dent d'arrêt (44) associée réalisé dans le fond longitudinal du premier tronçon (48).

## Claims

1. Windscreen-wiper blade (10) of a motor vehicle, comprising:
- a support frame (12) with a longitudinal main orientation, which comprises means (28) for supporting a wiping strip and a tubular body (18) with a longitudinal main axis;
- a structural element (14) in the form of a longitudinal horizontal strip, which is received inside the tubular body (18); and
- an element (16) for linking the blade (10) with a drive arm, which is mounted on the support frame (12), and which comprises blocking means for longitudinally blocking the structural element (14) in position in the tubular body (18),
**characterised in that** the means for blocking the linking element (16) comprise lugs (40) that cooperate with recesses (42) made in the lateral edges (14a) of the structural element (14), to ensure the structural element (14) is blocked in the tubular body (18).

2. Windscreen-wiper blade according to the preceding claim, wherein the tubular body (18) is delimited by a top horizontal wall (20), a bottom horizontal wall (22) and two vertical longitudinal walls (24), the linking element (16) being mounted on the support frame (12) by means of two vertical longitudinal lateral tabs (34) which extend on either side of the lateral walls (24) of the tubular body (18), **characterised in that** the lugs (40) are arranged on the lateral tabs (34).

3. Windscreen-wiper blade (10) according to the preceding claim, **characterised in that** each lug (40) extends transversally towards the inside of the linking element (16) from an inner vertical longitudinal surface (34a) of the associated lateral tab (34), and **in that** the free transversal end of each lug (40) comprises a locking cog (44) which is received in an associated recess (42) of the structural element (14).

4. Windscreen-wiper blade (10) according to the preceding claim, **characterised in that** each locking cog (44) locks part of a lateral wall (24) of the tubular body (18) in the bottom of the associated recess (42).

5. Windscreen-wiper blade (10) according to any one of the claims from 2 to 4, **characterised in that** the lateral walls (24) and the top wall (20) of the tubular body (18) comprise a lateral opening (46) located opposite each recess (42) of the structural element (14), which the locking cog (44) of the associated lug (40) passes through.

6. Windscreen-wiper blade (10) according to the preceding claim, **characterised in that** the lateral opening (46) is made by cutting the associated lateral wall (24) and the top wall (20) of the tubular body (18) prior to assembling the linking element (16) on the support frame (12).

7. Windscreen-wiper blade (10) according to the preceding claim, **characterised in that** each lateral opening (46) comprises a notch (52) made in the top horizontal wall (20) of the body (18), and **in that** the free transversal end of each lug (40) comprises a top cog (58) which is received in said notch (52), to longitudinally position the linking element (16) in relation to the support frame (12).

8. Windscreen-wiper blade (10) according to the preceding claim, **characterised in that** each notch (52) and its associated top cog (58) have matching shapes, overall trapezoidal.

9. Windscreen-wiper blade (10) according to claim 5, **characterised in that** the lateral opening (46) is made by cutting the associated lateral wall (24) and the top (20) and bottom (22) horizontal walls of the tubular body (18), when mounting the linking element (16) on the support frame (12).

10. Windscreen-wiper blade (10) according to the preceding claim, **characterised in that** the free transversal end of each lug (40) comprises a top cog (58) located above the locking cog (44), which can partially cut the associated lateral wall (24) and the top horizontal wall (20) of the tubular body (18), a bottom cog (60) located below the locking cog (44), which can partially cut the associated lateral wall (24) and the bottom horizontal wall (22) of the tubular body (18), and **in that** the locking cog (44) can partially cut the associated lateral wall (24) in order to cut the opening (46) when mounting the linking element (16) on the support frame (12).

11. Windscreen-wiper blade (10) according to the preceding claim, **characterised in that** the locking cog (44) is located transversally withdrawn in relation to the top cog (58) and in relation to the bottom cog (60).

12. Windscreen-wiper blade (10) according to claim 10 or 11, **characterised in that** the top (58) and bottom cogs (60) are arranged vertically on either side of the structural element (14), so as to ensure the vertical positioning of the structural element (14) in relation to the linking element (16).

13. Windscreen-wiper blade (10) according to any one of the claims from 3 to 12, **characterised in that** the locking cog (44), the top cog (58) and/or the bottom cog (60) are in the shape of a prism with a triangular horizontal cross-section.

14. Windscreen-wiper blade (10) according to the preceding claim, **characterised in that** every recess (42) of the structural element (14) has an overall triangular shape to match the associated locking cog (44).

15. Windscreen-wiper blade (10) according to any one of the claims from 3 to 13, **characterised in that** every recess (42) of the structural element (14) comprises a first section (48) with an overall rectangular shape made in the lateral edge (14a) of the structural element (14), and a section (50) with an overall triangular shape to match the associated locking cog (44) made in the longitudinal bottom of the first section (48).

## Patentansprüche

1. Wischerblatt (10) für ein Kraftfahrzeug, das folgende Teile umfaßt:
- Einen Stützrahmen (12) mit hauptsächlicher Längsausrichtung, der Mittel (28) zum Tragen eines Wischergummis und einen röhrenförmigen Körper (18) mit Hauptlängsachse umfaßt;
- Ein Strukturelement (14) in Form eines horizontalen Längsblatts, das im Innern des röhrenförmigen Körpers (18) aufgenommen wird;
- Ein Verbindungselement (16) für das Wischerblatt (10) mit einem Antriebsarm, das auf den Stützrahmen (12) montiert ist, und das Sperrmittel zum Sperren des Strukturelements (14) in Längsrichtung umfaßt, das im röhrenförmigen Körper in Position ist,
**dadurch gekennzeichnet, daß** die Sperrmittel des Verbindungselements (16) Nocken (40) umfassen, die mit Kerben (42) zusammenwirken, die in den seitlichen Kanten (14a) des Strukturelements (14) ausgeführt sind, damit die Sperrung des Strukturelements (14) im röhrenförmige Körper (18) ausgeführt wird.

2. Wischerblatt nach dem vorstehenden Anspruch, **dadurch gekennzeichnet, daß** der röhrenförmige Körper (18) durch eine obere horizontale Wand (20), eine untere horizontale Wand (22) und durch zwei vertikale längsverlaufende Seitenwände (24) abgegrenzt wird, wobei das Verbindungselement (16) über zwei seitliche längliche vertikale Laschen (34) auf dem Stützrahmen (12) montiert ist, die sich zu beiden Seiten der Seitenwände (24) des röhrenförmige Körpers (18 erstrecken, **dadurch gekennzeichnet, daß** die Nocken (40) auf den seitlichen Laschen (34) gestaltet sind.

3. Wischerblatt (10) nach dem vorstehenden Anspruch, **dadurch gekennzeichnet, daß** sich jeder Nocken (40) sich ab einer vertikalen inneren Längsseite (34a) der zugehörigen seitlichen Lasche (34) quer zum Innern des Verbindungselements erstreckt, und **dadurch**, daß das freie quer verlaufende Ende jedes Nockens (40) einen Sperrzahn (40) umfaßt, der in einer zum Strukturelement (14) gehörenden Kerbe (42) aufgenommen wird.

4. Wischerblatt (10) nach dem vorstehenden Anspruch, **dadurch gekennzeichnet, daß** jeder Sperrzahn (44) die Klemmung eines Teils einer Seitenwand (24) des röhrenförmige Körpers (18) im Boden der zugehörigen Kerbe (42) ausführt.

5. Wischerblatt (10) nach einem beliebigen der vorstehenden Ansprüche 2 bis 4, **dadurch gekennzeichnet, daß** die Seitenwände (24) und die obere Wand (20) des röhrenförmige Körpers (18) eine seitliche Öffnung (46) umfassen, die sich gegenüber jeder Kerbe (42) des Strukturelements (14) befindet, und die vom Sperrzahn (44) des zugehörigen Nockens (40) durchquert wird.

6. Wischerblatt (10) nach dem vorstehenden Anspruch, **dadurch gekennzeichnet, daß** die seitliche Öffnung (46) durch Stanzung aus der zugehörigen Seitenwand (24) und der oberen Wand (20) des röhrenförmige Körpers (18) vor der Montage des Verbindungselements (16) auf den Stützrahmen (12) ausgeführt wird.

7. Wischerblatt (10) nach dem vorstehenden Anspruch, **dadurch gekennzeichnet, daß** jede seitliche Öffnung (46) einen Einschnitt (52) umfaßt, der in der horizontalen oberen Wand (20) des Körpers (18) ausgeführt ist, und **dadurch**, daß das freie quer verlaufende Ende jedes Nockens (40) einen oberen Zahn (58) umfaßt, der in besagtem Einschnitt (52) aufgenommen wird, damit das Verbindungselement (16) längs im Verhältnis zum Stützrahmen (12) positioniert wird.

8. Wischerblatt (10) nach dem vorstehenden Anspruch, **dadurch gekennzeichnet, daß** jeder Einschnitt (52) und der zugehörige obere Zahn (58) ergänzende insgesamt trapezförmige Formen haben.

9. Wischerblatt (10) nach Anspruch 5, **dadurch gekennzeichnet, daß** die seitliche Öffnung (46) durch Stanzung der zugehörigen Seitenwand (24) und der horizontalen oberen (20) und der unteren Wand (22) des röhrenförmige Körpers (18) bei der Montage des Verbindungselements (16) auf dem Stützrahmen (12) ausgeführt wird.

10. Wischerblatt (10) nach dem vorstehenden Anspruch, **dadurch gekennzeichnet, daß** das freie quer verlaufende Ende jedes Nockens (40) einen oberen Zahn (58) umfaßt, der sich oberhalb des Sperrzahns (44) befindet, und der geeignet ist, die zugehörige Seitenwand (24) und die obere horizontale Wand (20) des röhrenförmige Körpers (18) teilweise auszustanzen, einen unteren Zahn (60), der sich unterhalb des Sperrzahns (44) befindet, der geeignet ist, die zugehörige Seitenwand (24) und die untere horizontale Wand (22) des röhrenförmige Körpers (18) teilweise auszustanzen, und **dadurch**, daß der Sperrzahn (44) geeignet ist, die zugehörige Seitenwand (24) teilweise auszustanzen, um den Ausschnitt der Öffnung (46) bei der Montage des Verbindungselements (16) auf dem Stützrahmen (12) auszuführen;

11. Wischerblatt (10) nach dem vorstehenden Anspruch, **dadurch gekennzeichnet, daß** sich der Sperrzahn (44) quer im Verhältnis zum oberen Zahn (58) und im Verhältnis zum unteren Zahn (60) im Rücksprung befindet.

12. Wischerblatt (10) nach Anspruch 10 oder 11, **dadurch gekennzeichnet, daß** der obere (58) und der untere Zahn (60) vertikal zu beiden Seiten des Strukturelements (14) gestaltet sind, so daß die vertikale Positionierung des Strukturelements (14) im Verhältnis zum Verbindungselement (16) erzielt wird.

13. Wischerblatt (10) nach einem beliebigen der vorstehenden Ansprüche 3 bis 12, **dadurch gekennzeichnet, daß** der Sperrzahn (44), der obere Zahn (58) und/oder der untere Zahn (60) die Form eines Prismas mit dreieckigem horizontalem Querschnitt haben.

14. Wischerblatt (10) nach dem vorstehenden Anspruch, **dadurch gekennzeichnet, daß** jede Kerbe (42) des Strukturelements (14) hat eine insgesamt dreieckige Form ergänzend zum zugehörigen Sperrzahn (44) hat.

15. Wischerblatt (10) nach einem beliebigen der vorstehenden Ansprüche 3 bis 13, **dadurch gekennzeichnet, daß** jede Kerbe (42) des Strukturelements (14) einen ersten Abschnitt (48) mit insgesamt rechteckiger Form umfaßt, die in der seitlichen Kante (14a) des Strukturelements (14) ausgeführt wurde, und einen Abschnitt (50) mit insgesamt dreieckiger Form ergänzend zum zugehörigen Sperrzahn (44), der im Längsboden des ersten Abschnitts (48) ausgeführt wurde.
